# FASCICULE DE BREVET EUROPEEN

(11) **EP 2 070 453 B1**
(45) Date de publication et mention de la délivrance du brevet: **28.09.2011**
(21) Numéro de dépôt: 08356151.4
(22) Date de dépôt: 09.12.2008
(51) Int. Cl.: A47J 31/40

(54) **Machine à café automatique munie d'un distributeur automatique de mouture**
Automatic coffee machine equipped with an automatic grind dispenser
Automatische Kaffeemaschine mit automatischem Verteiler des Kaffeepulvers

(30) Priorité: 11.12.2007 FR 0708607
(43) Date de publication de la demande: 17.06.2009
(73) Titulaire: SEB S.A., 69130 Ecully (FR)
(72) Inventeur: Lebuffe, Gilles, 50890 Conde sur Vire (FR); Leveque, Patrick, 14500 Vire (FR)
(74) Mandataire: Kiehl, Hubert

(56) Documents cités:
- FR-A- 2 713 906

## Description

La présente invention concerne un distributeur automatique de mouture installé notamment sur une machine à café automatique.

On connaît du document FR 2713906 un distributeur automatique de mouture comportant un réservoir contenant une quantité de mouture, et au moins une palette rotative placée dans le fond du réservoir, entraînée en rotation par un groupe moteur, et apte en tournant, à transférer par une ouverture d'écoulement pratiquée dans le réservoir une quantité déterminée de mouture vers une sortie réalisée dans un boîtier et communiquant avec ladite ouverture du réservoir.

La quantité de mouture transférée est déterminée par le secteur angulaire parcouru par la palette ; ce secteur angulaire étant parcouru entre le démarrage et l'arrêt du groupe moteur. Or, lors de la commande d'arrêt du moteur, l'inertie de ce dernier fait que la position de l'arrêt effectif de la palette peut se faire avec une variation angulaire importante en fonction du niveau de la mouture dans le réservoir, de la granulométrie ou du tassement de la mouture. Cette variation induit une variabilité importante de la quantité de mouture distribuée d'un cycle à l'autre.

Le but de la présente invention est de remédier aux inconvénients précités et de proposer un distributeur automatique de mouture muni d'un dispositif permettant de délivrer une dose précise de mouture et ceci de façon répétitive.

Un autre but de l'invention est de proposer un distributeur automatique de mouture muni d'un dispositif permettant de délivrer une dose précise de mouture qui soit simple et économique à mettre en oeuvre.

Un autre but de l'invention est de proposer un distributeur automatique de mouture muni d'un dispositif permettant de délivrer une dose précise de mouture qui présente une grande fiabilité et un fonctionnement sûr.

Ces buts sont atteints avec un distributeur automatique de mouture comportant un réservoir contenant une quantité de mouture et au moins une palette rotative placée dans le fond du réservoir, la palette rotative étant entraînée en rotation par des moyens moteur alimentés par deux bornes et pilotés par un circuit de commande, la palette rotative transférant en tournant une quantité déterminée de mouture par une ouverture d'écoulement pratiquée dans le réservoir, du fait que le circuit de commande met en court-circuit les deux bornes des moyens moteur après la coupure de l'alimentation desdits moyens moteur.

Selon l'invention, la coupure de l'alimentation et la mise en court-circuit des deux bornes des moyens moteur lors de l'arrêt de la distribution de mouture permet d'obtenir un arrêt en position très précis de la palette rotative. La demanderesse a mis en évidence que la précision angulaire de l'arrêt de la palette est inférieure à quatre degrés ; soit cinq fois moins que lors de l'arrêt uniquement par coupure de l'alimentation des bornes des moyens moteur.

De plus, la réalisation d'un tel dispositif ne nécessite que quelques composants électroniques ajoutés au circuit de commande, ce qui fait que ce dispositif est très simple et économique à mettre en oeuvre.

Avantageusement, le circuit de commande comporte un micro contrôleur muni d'une seule sortie qui commande à la fois la coupure de l'alimentation et la mise en court circuit des deux bornes des moyens moteur.

Cette disposition permet d'obtenir un fonctionnement sûr du dispositif. En effet, même dans le cas d'une défaillance du micro contrôleur, la sortie ne peut pas commander la mise en court circuit des bornes des moyens moteurs sans couper leur alimentation.

De préférence, les moyens moteur comportent des moyens de détection de la position de la palette rotative pour l'arrêt de la distribution de mouture. Avantageusement, les moyens de détection de la position de la palette rotative sont constitués par une roue crantée et un micro interrupteur.

De préférence, les moyens moteur comportent un moteur alimenté par un courant continu.

Ces deux dispositions permettent de réaliser des moyens de détection de la position de la palette rotative et un groupe moteur de manière très économique à base de composants standards du commerce.

L'invention concerne également une machine à café automatique comportant un distributeur automatique de mouture caractérisée en ce que le distributeur automatique de mouture est conforme à l'invention.

Avantageusement, le réservoir est amovible et positionné dans un siège inclus dans la machine à café automatique et le siège comporte une sortie d'évacuation située en vis-à-vis de l'ouverture d'écoulement du réservoir et une languette de protection située au dessus de cette sortie pour en interdire l'accès aux doigts de l'utilisateur, une fois le récipient ôté.

Cette disposition permet de garantir la sécurité de la machine à café par une solution simple et économique pour interdire l'accès aux doigts de l'utilisateur à la sortie située dans le siège. L'arrêt en position très précis de la palette rotative permet de garantir que cette palette n'est pas sous la languette pour permettre de retirer le réservoir.

L'invention sera mieux comprise à l'étude d'un mode de réalisation pris à titre nullement limitatif et illustré dans les figures annexées dans lesquelles :
- La figure 1 illustre une vue en perspective d'une machine à café automatique comportant un distributeur automatique de mouture selon un mode particulier de réalisation de l'invention.
- La figure 2 illustre une vue éclatée en perspective du distributeur automatique de mouture de la machine à café automatique de la figure 1.

- La figure 3 est une vue du dessus illustrant le siège du boîtier muni d'une languette de la machine à café automatique de la figure 1.
- La figure 4 est une vue en écorché partiel du dessous illustrant la roue crantée et le micro interrupteur du distributeur automatique de mouture de la machine à café automatique de la figure 1.
- La figure 5 est une vue schématique du circuit de commande du moteur entraînant le distributeur automatique de mouture de la machine à café automatique de la figure 1.

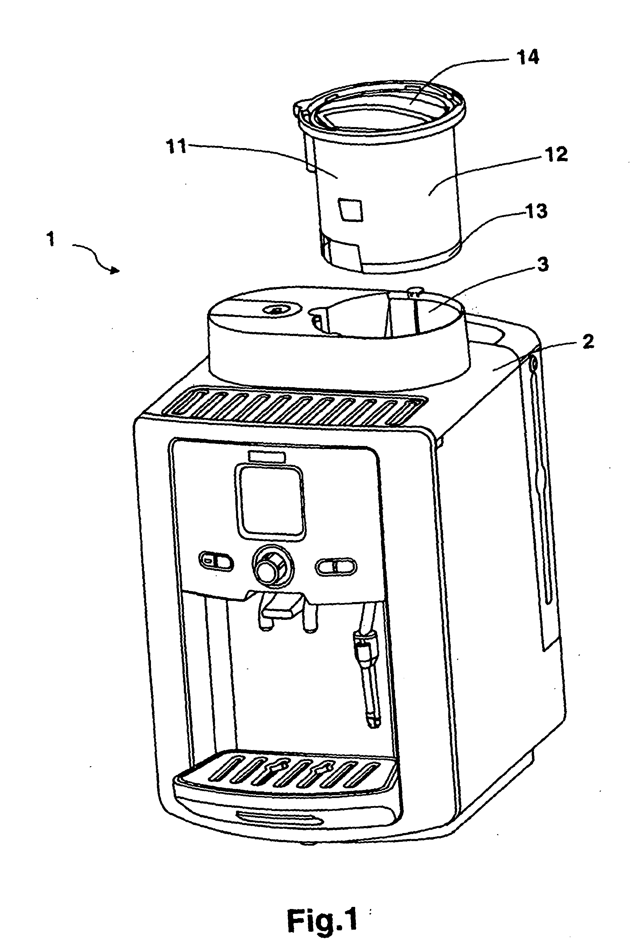

Les figures 1 à 5 illustrent un exemple de réalisation d'une machine à café automatique 1 comportant un distributeur automatique de mouture selon l'invention.

Tel que visible sur la figure 1, la machine à café automatique 1 comporte un boîtier 2 muni d'un siège 3 recevant un réservoir amovible 11 apte à contenir une quantité de mouture.

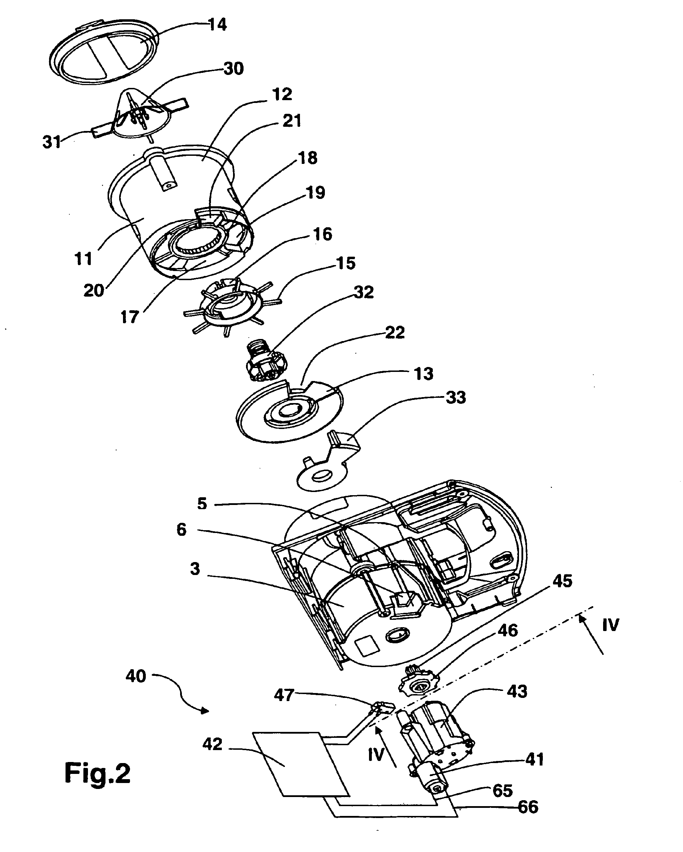

Tel que visible sur la figure 2, le réservoir 11, de forme générale cylindrique, présente une paroi latérale 12, un fond 13 et un couvercle 14. Le réservoir 11 comporte dans son fond 13 plusieurs palettes radiales rotatives 15, en l'occurrence au nombre de huit, qui sont régulièrement réparties le long d'un moyeu cylindrique 16 et qui s'étendent sensiblement jusqu'à la périphérie de la paroi latérale. Le moyeu cylindrique 16 est monté rotatif dans un berceau annulaire 18 porté par une pièce support intermédiaire 17 s'étendant parallèlement au fond 13 et solidaire de la paroi latérale 12.

Le réservoir 11 comporte, au dessus de la pièce support intermédiaire 17, un cône 30 muni de quatre pales 31 s'étendant latéralement et fixé sur la partie supérieure du moyeu cylindrique 16. Les pales 31 et le cône 30 en tournant transfèrent la mouture vers les palettes radiales rotatives 15 à travers des ouvertures 19 situées dans la pièce support intermédiaire 17.

Les palettes 15 sont destinées à être entraînées par l'intermédiaire du moyeu 16, à l'aide d'un mécanisme rotatif de couplage 32, par des moyens moteur 40 fixés dans le boîtier 2 en vue de transférer par une ouverture d'écoulement 20 pratiquée latéralement et dans le fond du réservoir 11, une dose déterminée de mouture vers une sortie d'évacuation 5 formée dans le siège 3 et communiquant directement avec l'ouverture d'écoulement 20.

L'ouverture d'écoulement 20 est constituée par une découpe 21 pratiquée dans la paroi latérale 12 du réservoir 11 entre la pièce support intermédiaire 17 et le fond 13 et par une découpe 22 pratiquée dans le fond 13 du réservoir 11 suivant un secteur annulaire circulaire.

Le réservoir 11 comporte un volet rotatif escamotable 33 permettant d'obturer l'ouverture d'écoulement 20 lors du retrait du réservoir 11 de la machine à café automatique 1.

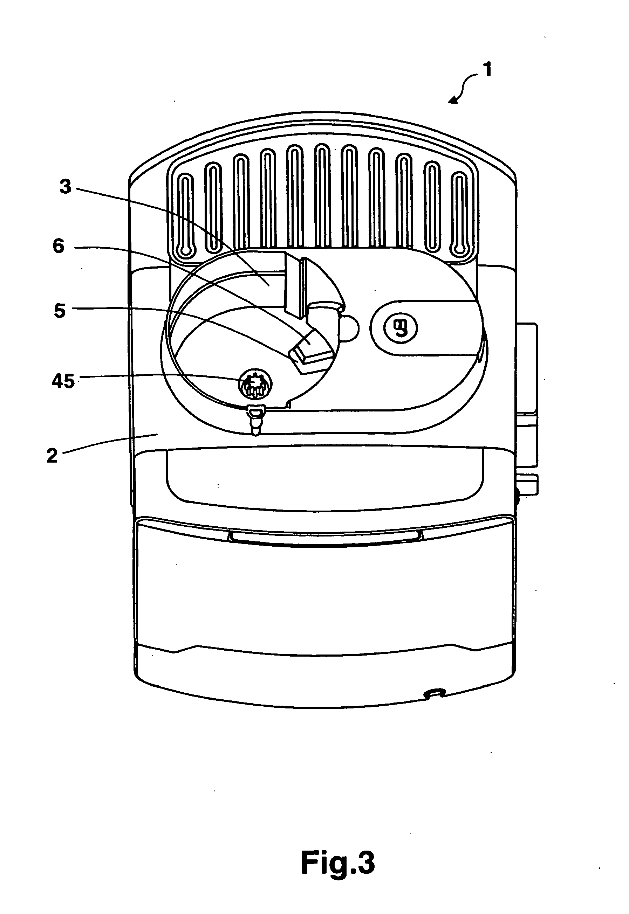

La sortie d'évacuation 5 (fig 3) située latéralement et dans le fond du siège 3 reprend la même forme que l'ouverture d'écoulement 20. Une languette 6 de protection fixée à la paroi du siège 3, s'étend radialement et est située au dessus de la sortie d'évacuation 5. La languette 6, en reprenant la forme de la découpe 22 du fond 13 du réservoir 11, est apte à se loger sous la pièce support intermédiaire 17 lors de la mise en place du réservoir dans la machine à café automatique 1 et autorise la rotation des palettes 15.

Lorsque le réservoir est retiré de la machine à café, la languette 6 empêche l'utilisateur d'insérer un doigt dans la sortie d'évacuation 5 du siège vers l'intérieur de la machine, ce qui peut être dangereux dans le cas d'un démarrage intempestif de la machine.

Après distribution de la dose déterminée de mouture, l'arrêt des moyens moteur 40 assure un positionnement des palettes radiales rotatives 15 tel que deux d'entre elles bordent l'ouverture d'écoulement 20 de façon à empêcher tout écoulement de la mouture.

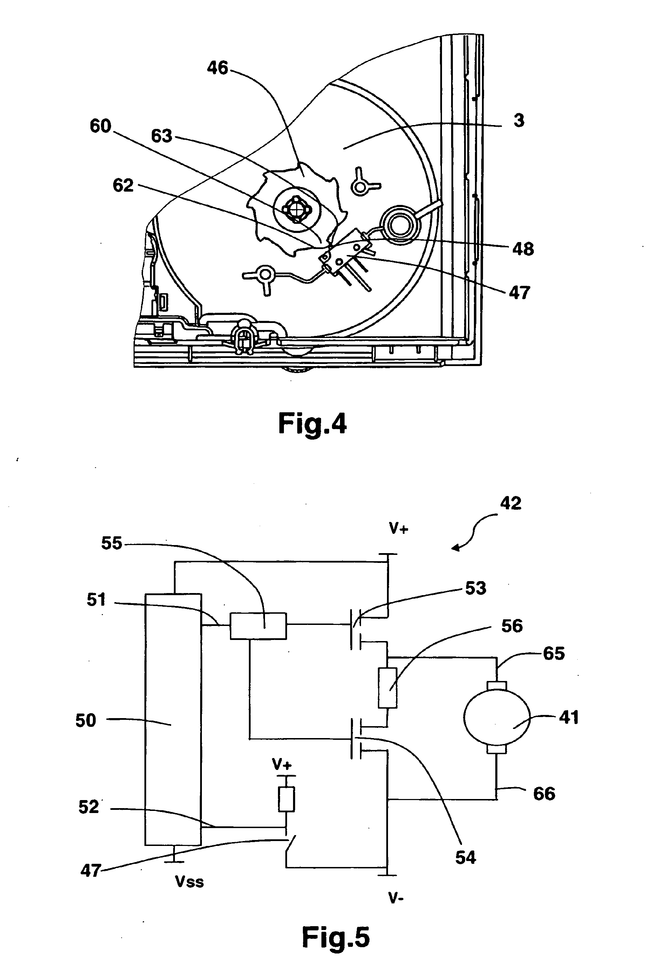

Les moyens moteur 40 (fig 2) comportent un moteur 41 muni de deux bornes 65, 66 alimentant ledit moteur par un courant continu, un circuit de commande du moteur 42, un réducteur 43 entraînant un organe de couplage constitué par un téton 45 formé sur la face supérieure d'une roue crantée 46 et un micro interrupteur 47 muni d'un contacteur 48. La roue crantée 46 (fig 4) comprend une pluralité de crans 60 égal au nombre de palettes rotatives 15. Chaque cran 60 comporte une rampe 62 adaptée à pousser le contacteur 48 du micro interrupteur 47 lors de la rotation du moteur 41 et un décrochement 63 adapté à relâcher le contacteur 48 du micro interrupteur 47. Chaque décrochement 63 est positionné de manière à ce que deux palettes rotatives 15 bordent l'ouverture d'écoulement 20 correspondant à une position d'arrêt possible, tous les huitièmes de tour. Le relâchement du contacteur 48 provoque un changement d'état du micro interrupteur 47 détecté par le circuit de commande 42 à l'aide d'une entrée 52.

La figure 5 représente de façon schématique le circuit de commande 42 qui comprend un micro-contrôleur 50 dont une sortie 51 pilote à son état haut un transistor 53 de mise en marche du moteur. La même sortie 51 pilote à son état bas un transistor 54 d'activation du frein moteur par court circuit des deux bornes 65, 66 du moteur 41. Le circuit de commande 42 comporte également une cellule de gestion 55 de la commande des deux transistors de façon à ne jamais les activer en même temps, même en cas de défaillance du micro-contrôleur 50.

Le circuit de commande 42 comprend un composant de protection formé par une résistance 56 qui permet de limiter le courant généré lors de l'arrêt du moteur 41 pour protéger le transistor 54 et de limiter le courant de court circuit lors des commutations des deux transistors 53, 54. La résistance 56 permet également d'assurer une fonction fusible en cas de défaillance de fonctionnement des transistors 53, 54.

Le circuit de commande 42 comporte également une mémoire (non illustrée dans les figures) dans laquelle un type de café i est associé à un nombre Ni de huitième de tour du moyeu portant les palettes rotatives, ce nombre Ni de huitième de tour correspondant à une quantité de mouture Mi.

En fonctionnement, l'utilisateur dispose de la mouture dans le réservoir 11 et le positionne dans le siège 3 du boîtier 2 de la machine à café automatique 1. Il commande ensuite la préparation d'un type de café i, ce qui va initier un cycle de distribution de mouture. Le circuit de commande 42 active la mise en marche du moteur 41 pour faire tourner les palettes rotatives 15 qui transfèrent la mouture vers la sortie d'évacuation 5 située dans le siège 3. Lorsque le circuit de commande 42 a détecté i changements d'état du micro interrupteur 47 générés par la rotation de la roue crantée 46, il commande l'arrêt du moteur 41 en coupant son alimentation, puis en court circuitant ses bornes 65, 66, ce qui provoque un arrêt précis des palettes rotatives 15.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, le circuit de commande coupe l'alimentation des moyens moteur et met en court-circuit les deux bornes de ces moyens moteur à l'aide de relais.

Dans une variante de réalisation, les moyens de détection de la position de la palette rotative sont constitués par un disque perforé et capteur optique.

Dans une autre variante de réalisation, les moyens de détection de la position de la palette rotative sont constitués par une roue supportant des aimants et un capteur à effet Hall.

## Revendications

1. Distributeur automatique de mouture comportant un réservoir (11) contenant une quantité de mouture et au moins une palette rotative (15) placée dans le fond du réservoir (11), ladite palette rotative (15) étant entraînée en rotation par des moyens moteur (40) alimentés par deux bornes (65, 66) et pilotés par un circuit de commande (42), ladite palette rotative (15) transférant en tournant une quantité déterminée de mouture par une ouverture d'écoulement (20) pratiquée dans le réservoir, **caractérisé en ce que** le circuit de commande (42) met en court-circuit les deux bornes (65, 66) des moyens moteur (40) après la coupure de l'alimentation desdits moyens moteur (40).

2. Distributeur automatique de mouture selon la revendication 1, **caractérisé en ce que** le circuit de commande (42) comporte un micro contrôleur (50) muni d'une seule sortie (51) qui commande à la fois la coupure de l'alimentation et la mise en court circuit des deux bornes (65, 66) des moyens moteur (40).

3. Distributeur automatique de mouture selon l'une quelconque des revendications 1 à 2, **caractérisé en ce que** les moyens moteur (40) comportent des moyens de détection de la position de la palette rotative (15) pour l'arrêt de la distribution de mouture.

4. Distributeur automatique de mouture selon la revendication 3, **caractérisé en ce que** les moyens de détection de la position de la palette rotative (15) sont constitués par une roue crantée (46) et un micro interrupteur (47).

5. Distributeur automatique de mouture selon l'une quelconque des revendications 1 à 4, **caractérisé en ce que** les moyens moteur (40) comportent un moteur (41) alimenté par un courant continu.

6. Machine à café automatique (1) comportant un distributeur automatique de mouture **caractérisée en ce que** le distributeur automatique de mouture est conforme à l'une quelconque des revendications 1 à 5.

7. Machine à café automatique (1) selon la revendication 6, **caractérisée en ce que** le réservoir (11) est amovible et positionné dans un siège (3) inclus dans la machine à café automatique (1) et **en ce que** le siège (3) comporte une sortie d'évacuation (5) située en vis-à-vis de l'ouverture d'écoulement (20) du réservoir (11) et une languette (6) de protection située au dessus de cette sortie (5) pour en interdire l'accès aux doigts de l'utilisateur, une fois le récipient (11) ôté.

## Claims

1. An automatic ground coffee dispenser comprising a vessel (11) containing an amount of ground coffee and at least one rotary paddle (15) placed in the bottom of the vessel (11), said rotary paddle (15) being driven in rotation by motor means (40) powered by two terminals (65, 66) and controlled by a control circuit (42), said rotary paddle (15) transferring, by rotating, a determined quantity of ground coffee through an outflow opening (20) made in the vessel, **characterised in that** the control circuit (42) short-circuits the two terminals (65, 66) of the motor means (40) after the cut-off of power supply to the motor means (40).

2. An automatic ground coffee dispenser according to claim 1, **characterised in that** the control circuit (42) comprises a micro-controller (50) fitted with only one output (51) which controls both the cut-off of power supply and the short-circuiting of the two terminals (65, 66) of the motor means (40).

3. An automatic ground coffee dispenser according to any one of claims 1 to 2, **characterised in that** the motor means (40) comprise a means for detecting the position of the rotary paddle (15) for stopping the ground coffee from being dispensed.

4. An automatic ground coffee dispenser according to claim 3, **characterised in that** the means for detecting the position of the rotary paddle (15) is made up of a sprocket wheel (46) and micro-switch (47).

5. An automatic ground coffee dispenser according to any one of claims 1 to 4, **characterised in that** the motor means (40) comprise a motor (41) powered by direct current.

6. An automatic coffee machine (1) comprising an automatic ground coffee dispenser **characterised in that** the automatic ground coffee dispenser conforms to any one of claims 1 to 5.

7. An automatic coffee machine (1) according to claim 6, **characterised in that** the vessel (11) is removable and is positioned in a seat (3) included in the automatic coffee machine (1) and **in that** the seat (3) comprises an evacuation outlet (5) situated opposite the outflow opening (20) of the vessel (11) and a protective tab (6) situated above this outlet (5) to prevent the user's fingers from penetrating it, once the vessel (11) is removed.

## Patentansprüche

1. Automatischer Kaffeemehlspender, umfassend einen Behälter (11), der eine Menge Kaffeemehl enthält, und mindestens einen Drehflügel (15), der am Boden des Behälters (11) angeordnet ist, wobei der Drehflügel (15) von Motormitteln (40) in Drehung versetzt wird, die von zwei Klemmen (65, 66) versorgt und von einem Steuerstromkreis (42) gesteuert werden, wobei der Drehflügel (15) durch die Drehbewegung eine bestimmte Menge an Kaffeemehl durch eine Abgabeöffnung (20) befördert, die im Behälter ausgebildet ist, **dadurch gekennzeichnet, dass** der Steuerstromkreis (42) die zwei Klemmen (65, 66) der Motormittel (40) nach Unterbrechung der Versorgung der Motormittel (40) kurzschließt.

2. Automatischer Kaffeemehlspender nach Anspruch 1, **dadurch gekennzeichnet, dass** der Steuerstromkreis (42) einen Mikrocontroller (50) umfasst, der über einen einzigen Ausgang (51) verfügt, der sowohl die Versorgungsunterbrechung als auch den Kurzschluss der zwei Klemmen (65, 66) der Motormittel (40) steuert.

3. Automatischer Kaffeemehlspender nach einem der Ansprüche 1 bis 2, **dadurch gekennzeichnet, dass** die Motormittel (40) Mittel zur Erfassung der Position des Drehflügels (15) zum Anhalten der Kaffeemehlabgabe umfassen.

4. Automatischer Kaffeemehlspender nach Anspruch 3, **dadurch gekennzeichnet, dass** die Mittel zur Erfassung der Position des Drehflügels (15) von einem Zahnrad (46) und einem Mikroschalter (47) gebildet werden.

5. Automatischer Kaffeemehlspender nach einem der Ansprüche 1 bis 4, **dadurch gekennzeichnet, dass** die Motormittel (40) einen Motor (41) umfassen, der mit Gleichstrom versorgt wird.

6. Kaffeeautomat (1), umfassend einen automatischen Kaffeemehlspender, **dadurch gekennzeichnet, dass** der automatische Kaffeemehlspender einem der Ansprüche 1 bis 5 entspricht.

7. Kaffeeautomat (1) nach Anspruch 6, **dadurch gekennzeichnet, dass** der Behälter (11) abnehmbar und in einem Sitz (3) angeordnet ist, der im Kaffeeautomaten (1) integriert ist, und dadurch, dass der Sitz (3) einen Abfließausgang (5), der sich gegenüber der Abgabeöffnung (20) des Behälters (11) befindet, und eine Schutzlasche (6) umfasst, die sich über diesem Ausgang (5) befindet, um ein Hineingreifen des Benutzers mit seinen Fingern zu verhindern, sobald der Behälter (11) abgenommen wurde.
